Europäisches Patentamt

European Patent Office

Office européen des brevets

(11) Veröffentlichungsnummer: **0 459 086 A2**

## (12) EUROPÄISCHE PATENTANMELDUNG

(21) Anmeldenummer: **91102457.8**

(22) Anmeldetag: **20.02.91**

(51) Int. Cl.5: **B05D** 1/06, B65G 53/16

(30) Priorität: **31.05.90 DE 4017603**

(43) Veröffentlichungstag der Anmeldung:
**04.12.91 Patentblatt 91/49**

(84) Benannte Vertragsstaaten:
**CH DK FR GB IT LI NL**

(71) Anmelder: **WAGNER INTERNATIONAL AG**
**Industriestrasse 22**
**CH-9450 Altstätten(CH)**

(72) Erfinder: **Talacko, Radovan, Dipl.-Ing.**
**Sturzeneggstrasse 19**
**CH-9015 St. Gallen(CH)**

(74) Vertreter: **Münzhuber, Robert, Dipl.-Phys. et al**
**Patentanwalt Rumfordstrasse 10**
**W-8000 München 5(DE)**

(54) Verfahren zum Fluidisieren, Fördern und/oder Zerstäuben von festen und flüssigen Beschichtungsmaterialien.

(57) Beim Fluidisieren, Fördern und/oder Zerstäuben von pulverförmigem oder flüssigem Beschichtungsmaterial bei der Oberflächenbeschichtung, insbesondere bei der elektrostatischen Oberflächenbeschichtung, wird ein unter hohem Druck stehendes Inertgas auf Betriebsdruck entspannt, wobei es sich abkühlt, und das eine Temperatur unter Umgebungstemperatur aufweisende Gas als Druckgas für das Fluidisieren, Fördern und/oder Zerstäuben verwendet.

EP 0 459 086 A2

Die Erfindung betrifft ein Verfahren zum Fluidisieren, Fördern und/oder Zerstäuben von pulverförmigen und flüssigen Beschichtungsmaterialien, insbesondere für die elektrostatische Oberflächenbeschichtung, mittels Druckgas.

Bei der Oberflächenbeschichtung wird zum Fluidisieren, zum Fördern und zum Zerstäuben von Beschichtungspulver sowie zum Zerstäuben von Beschichtungsflüssigkeiten, wie Farben und Lakken, Druckluft verwendet, die entweder direkt aus einem Kompressor oder aus einem Druckluftnetz zur Verfügung gestellt wird. Erforderlichenfalls sind Druckminderventile vorgesehen, um die vom Netz bzw. dem Kompressor mit im allgemeinen 8 bis 12 bar gelieferte Druckluft auf den jeweils gewünschten Betriebsdruck zu entspannen.

Druckluft steht nahezu überall zur Verfügung und stellt ein sehr kostengünstiges Druckmedium dar. Eingehende Untersuchungen haben jedoch ergeben, daß die Druckluft auf dem hier interessierenden Gebiet der Oberflächenbeschichtung auch nachteilige Wirkungen hat. So führt Druckluft Wasser- und Ölrückstände mit,die zu unbefriedigenden Arbeitsergebnissen beim Auftrag des Beschichtungsmaterials auf das Werkstück führt, es sei denn, man setzt Wasserabscheider und Entöler ein, was zu einer beträchtlichen Erhöhung der Betriebskosten führt. Weiterhin ist von Bedeutung, daß die Druckluft Temperaturen aufweist, die entweder der Umgebungstemperatur entsprechen oder, bedingt durch den Verdichtungsvorgang, darüber liegen. Nun ist aber die Ionisationsfähigkeit der Luft proportional ihrer Temperatur, mit der Folge, daß beim elektrostatischen Beschichten die zum Zerstäuben des Beschichtungsmaterials verwendete und vergleichsweise warme Druckluft sich stark auflädt, bei gegebener Aufladeenergie die gewünschte Aufladung der Pulverpartikel oder Flüssigkeitströpfchen somit beeinträchtigt wird. Eine Kühlung der Zerstäuberluft mittels Kühlaggregaten ist zwar möglich, jedoch kostspielig und führt darüber hinaus beim Einbau der Aggregate in Handsprühpistolen zu Isolations- und Gewichtsproblemen.

Aufgabe der vorliegenden Erfindung ist es deshalb, das Verfahren der eingangs erwähnten Art so zu verbessern, daß es nicht zur Beeinträchtigung des Beschichtungsmaterials durch Wasser- und/oder Öltröpfchen kommt und beim elektrostatischen Beschichten ein hoher Aufladungswirkungsgrad des Beschichtungsmaterials gewährleistet ist. Die Kosten des Verfahrens aber trotzdem in wirtschaftlich vertretbaren Grenzen bleiben. Die Lösung dieser Aufgabe besteht darin, daß ein unter hohen Druck stehendes Inertgas auf den erforderlichen Betriebsdruck entspannt wird, wobei es sich auf eine Temperatur unter Umgebungstemperatur abkühlt, und daß dieses kühle Inertgas dann als das Druckgas verwendet wird.

Besonders geeignet ist dabei reiner Stickstoff. So ist Stickstoff beispielsweise in verflüssigter Form in Druckflaschen oder -tanks erhältlich, und zwar vergleichsweise kostengünstig und nahezu frei von Wasser- und Ölrückständen. Wird dieser verflüssigte Stickstoff vergast, dann ist es, etwa über mehrere Reduzierstufen, ohne Schwierigkeiten möglich, den gewünschten Betriebsdruck von beispielsweise 2 bis 6 bar, und zugleich die gewünschte Betriebstemperatur von beispielsweise 5 bis 10° C zu erreichen, ohne daß es dazu einer von außen zugeführten Energie bedarf. Wird dieses vergleichsweise kühle Gas verwendet, dann werden, wie Versuche erwiesen haben, höhere spezifische Pulvermengen injiziert und transportiert als bei Verwendung der vergleichsweise warmen Druckluft. Darüber hinaus hat man experimentell finden können, daß beim elektrostatischen Sprühen während des Ladevorgangs im Bereich des elektrostatischen Feldes das kühlere Stickstoffgas weniger Ladung aufnimmt als die wärmere Druckluft, womit mehr Ladeenergie direkt auf die Pulver- oder Flüssigkeitspartikel übertragen wird; der Aufladungs- und Niederschlagswirkungsgrad ist jedenfalls wesentlich verbessert. Ausserdem wird durch die Verwendung von Inertgas die Zerstäuberwolke im wesentlichen frei von Luft und damit von Sauerstoff gehalten, so daß in der Zerstäuberwolke selbst kein zündfähiges Gas vorhanden ist; auch die Bildung einer zündfähigen Gasatmosphäre im Arbeitsraum bzw. der Sprühkabine wird reduziert.

Die Temperaturveränderung des auf einen Wert von beispielsweise 5 bis 10° C gebrachten Stickstoffs durch seinen Transport durch die Versorgungsleitungen hindurch ist so minimal,und zwar aufgrund der vergleichsweisen hohen Strömungsgeschwindigkeiten, daß sie kaum eine Rolle spielen, auch nicht bei langen Versorgungsleitungen.

Wird das reine Inertgas als Zerstäuberluft bei luftgelagerten Rotationszerstäubern verwendet, dann bietet es sich an, dieses Inertgas auch zum Antrieb des Rotationszerstäubers heranzuziehen, weil damit Lagerungsprobleme durch dem Antriebsgas beigefügte Wasser- und Öltröpfchen ausgeschaltet werden.

An Stelle des flüssigen Sticksoffs kann auch hochvorgespanntes Stickstoffgas für den Betrieb bereitgestellt werden, wobei die gewünschte Temperatur durch den Expansionsvorgang bei der Druckreduzierung erzielt wird. Weiterhin ist es möglich, an Stelle von reinem Stickstoff reines Kohlendioxid zu verwenden, das bezüglich Aggregatszustandsänderung sowie Druck-Temperatur-Charakteristik mit dem Stickstoff vergleichbar, ebenfalls kostengünstig und in der Lage ist, eine Schutzgasatmosphäre zu bilden. Die angegebenen Betriebsdrücke von 2 bis 6 bar und Betriebstemperaturen von 5 bis 10° C sollen selbstverständlich nur Leitbereiche darstellen.

Wenn auch die Kosten für das Inertgas, etwa Stickstoff, etwas höher liegen als diejenigen für Druckluft, so kann trotzdem die Wirtschaftlichkeit verbessert sein, und zwar durch Wegfall von Wasserabscheidern und Entölern sowie den höheren Niederschlagswirkungsgrad bei der Beschichtung. Außerdem kann eine vorsorgliche Löschanlage im Spritzbereich entfallen.

## Patentansprüche

1.  Verfahren zum Fluidisieren, Fördern und/oder Zerstäuben von festen und flüssigen Beschichtungsmaterialien bei der Oberflächenbeschichtung, insbesondere der elektrostatischen Oberflächenbeschichtung, mittels eines Druckgases, dadurch gekennzeichnet, daß ein unter hohem Druck stehendes, reines Inertgas auf den gewünschten Betriebsdruck entspannt wird, wobei sich das Inertgas auf eine Temperatur unter Umgebungstemperatur abkühlt, und daß dieses kühle Inertgas als das Druckgas verwendet wird.

2.  Verfahren nach Anspruch 1, dadurch gekennzeichnet, daß ein Inertgas einer Temperatur von 5 bis 10° C als Druckgas verwendet wird.

3.  Verfahren nach Anspruch 1 oder 2, dadurch gekennzeichnet, daß als Inertgas ein unter Hochdruck verflüssigbares Gas, vorzugsweise reiner Stickstoff, verwendet wird.